# DEMANDE DE BREVET EUROPEEN

(11) **EP 1 164 775 A1**
(43) Date de publication de la demande: **19.12.2001**
(21) Numéro de dépôt: 00401693.7
(22) Date de dépôt: 15.06.2000
(51) Int. Cl.: H04M 11/06

(54) **Procédés d'émission et de réception d'informations téléphoniques et informatiques et dispositif du multiplexage/démultiplexage associé**

(71) Demandeur: SAGEM SA, 75116 Paris (FR)
(72) Inventeur: Madenian, Marc, 75013 Paris (FR)
(74) Mandataire: Bloch, Gérard

(57) **Abrégé**

Les deux équipements (20, 21) sont connectés à une même ligne (101) du réseau téléphonique (100). En émission, côté équipements (20, 21), on multiplexe les informations téléphoniques et les informations informatiques et on les transmet, par ladite ligne (101) du réseau téléphonique (100), vers un serveur (30) qui les démultiplexe afin de retransmettre les informations téléphoniques vers le réseau téléphonique (100) et les informations informatiques vers le réseau informatique (101). En réception, côté réseaux (100, 103), on transmet les informations téléphoniques et les informations informatiques à un serveur (30) qui les multiplexe avant de les retransmettre vers les deux équipements (20, 21), par ladite ligne (101) du réseau téléphonique (100), et, côté équipements (20, 21), on démultiplexe les informations reçues afin de retransmettre les informations téléphoniques vers l'équipement téléphonique (20) et les informations informatiques vers l'équipement informatique (21).

## Description

Un réseau informatique tel que l'Internet permet à des utilisateurs, à l'aide d'un équipement informatique de communication tel qu'un PC (Personal Computer - ordinateur personnel), de dialoguer entre eux, de s'envoyer des courriers électroniques, de visiter des sites Web, etc..

Pour communiquer à travers l'Internet, il faut au préalable s'y connecter, par exemple par liaison téléphonique à un fournisseur d'accès. Une même ligne d'un réseau téléphonique tel que le réseau RTC, à laquelle sont connectés un équipement informatique et un équipement téléphonique, tel qu'un téléphone, peut servir à la fois pour téléphoner à travers le réseau téléphonique et pour communiquer à travers l'Internet.

Une telle installation, comprenant deux équipements de communication, téléphonique et informatique, tous deux reliés à une même ligne téléphonique, présente cependant un inconvénient. En effet, lorsque l'un des deux équipements est en cours de communication, la ligne téléphonique est occupée de sorte que l'autre équipement ne peut pas communiquer. Or les communications peuvent s'avérer longues, en particulier à travers l'Internet, et par conséquent encombrer la ligne téléphonique de façon gênante pour l'autre équipement.

La présente invention vise à pallier cet inconvénient.

A cet effet, l'invention concerne un procédé pour émettre à la fois des informations téléphoniques, d'un équipement téléphonique de communication à travers un réseau téléphonique, et des informations informatiques, d'un équipement informatique de communication à travers un réseau informatique, les deux équipements étant connectés à une même ligne du réseau téléphonique, dans lequel, côté équipements, on multiplexe les informations téléphoniques et les informations informatiques et on les transmet, par ladite ligne du réseau téléphonique, vers un serveur qui les démultiplexe afin de retransmettre les informations téléphoniques vers le réseau téléphonique et les informations informatiques vers le réseau informatique.

Dans un mode de réalisation particulier, côté équipements, on met les informations téléphoniques et les informations informatiques sous forme de paquets de données téléphoniques et de paquets de données informatiques, respectivement, en insérant un descripteur de contenu dans chacun des paquets de données de l'un au moins des deux types de données, téléphonique et informatique, et on émet les paquets de données vers le serveur qui discrimine les paquets de données téléphoniques et les paquets de données informatiques, à l'aide des descripteurs.

L'invention concerne aussi un procédé pour recevoir à la fois des informations téléphoniques, destinées à un équipement téléphonique de communication à travers un réseau téléphonique, et des informations informatiques, destinées à un équipement informatique de communication à travers un réseau informatique, les deux équipements étant connectés à une même ligne du réseau téléphonique, dans lequel, côté réseaux, on transmet les informations téléphoniques et les informations informatiques, destinées aux deux équipements, vers un serveur qui les multiplexe avant de les retransmettre vers les deux équipements, par ladite ligne du réseau téléphonique, et, côté équipements, on démultiplexe les informations reçues afin de retransmettre les informations téléphoniques vers l'équipement téléphonique et les informations informatiques vers l'équipement informatique.

Dans un mode de réalisation particulier, les informations informatiques reçues par le serveur étant sous forme de paquets de données informatiques, le serveur met les informations téléphoniques sous forme de paquets de données téléphoniques en insérant un descripteur de contenu dans chacun des paquets de données de l'un au moins des deux types de données, et, côté équipements, on discrimine les paquets de données téléphoniques et les paquets de données informatiques, à l'aide des descripteurs.

L'invention concerne également un dispositif de multiplexage / démultiplexage d'informations téléphoniques et d'informations informatiques pour la mise en oeuvre de chacun des procédés ci-dessus, comprenant des moyens de multiplexage / démultiplexage d'informations téléphoniques et d'informations informatiques reliés à trois ports de liaison à deux lignes téléphoniques et à une ligne informatique, respectivement.

L'invention sera mieux comprise à l'aide de la description suivante des procédé d'émission et de réception d'informations informatiques et d'informations téléphoniques, d'un dispositif de multiplexage / démultiplexage et d'un serveur de multiplexage / démultiplexage, selon une forme de réalisation particulière de l'invention, en référence au dessin annexé sur lequel:
- la figure 1 représente un schéma de deux équipements, informatique et téléphonique, reliés à un réseau téléphonique par l'intermédiaire du dispositif de multiplexage / démultiplexage, et du serveur relié au réseau téléphonique et à un réseau informatique;
- la figure 2 représente un schéma bloc fonctionnel du dispositif de multiplexage / démultiplexage de la figure 1 et
- la figure 3 représente un schéma bloc fonctionnel du serveur de la figure 1.

Les procédés d'émission et de réception de l'invention permettent à un équipement téléphonique 20, de communication à travers un réseau téléphonique 100, en l'espèce le réseau téléphonique commuté (RTC) filaire, et à un équipement informatique 21, de communication à travers un réseau informatique 103, en l'espèce l'Intemet, tous deux reliés à une même ligne 101 du réseau téléphonique 100, de communiquer simultanément.

Dans l'exemple particulier de la description, l'équipement téléphonique 20 est un téléphone et l'équipement informatique 21 est un ordinateur PC (Personal Computer - ordinateur personnel), comportant un modem, une application de connexion à l'Internet 103 et une application de communication à travers l'Internet 103.

L'application de connexion à l'Internet 103 permet à l'équipement 21 de se connecter à l'Internet 103, par connexion téléphonique, à travers le réseau téléphonique 100, à un serveur 30 fournisseur d'accès à l'Internet 103, suivant un protocole de connexion à l'Internet 103.

On rappelle ici que L'Internet 103 est un réseau informatique à commutation de paquets. En d'autres termes, les données sont transmises à travers l'Internet 103 sous forme de paquets de données, suivant des protocoles de communication de l'Internet 103.

L'application de communication à travers l'Internet 103 de l'équipement 21 comprend un module de conversion de format destiné, en émission, à décomposer les données informatiques à émettre en paquets de données informatiques et, en réception, à recomposer des données informatiques à partir de paquets de données informatiques reçus, ici suivant les protocoles standards TCP/IP (Transfer Control Protocol / Internet Protocol - protocole de contrôle de transmission / protocole Internet).

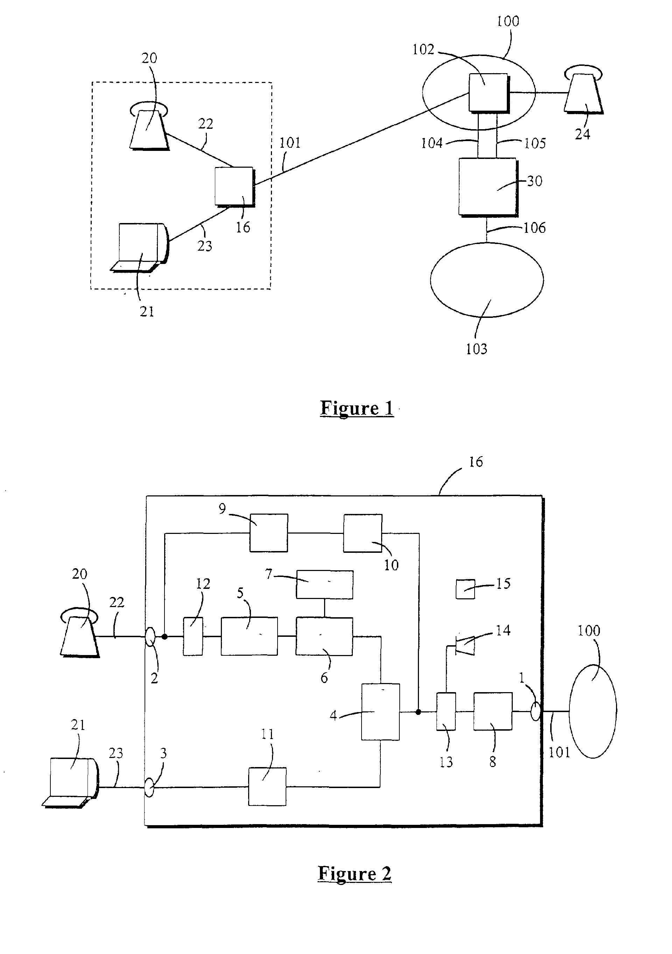

Les deux équipements 20, 21 sont reliés à la ligne téléphonique 101, avec interposition d'un dispositif 16 de multiplexage / démultiplexage qui va maintenant être décrit, en référence à la figure 2.

Le dispositif 16 comprend trois ports 1-3 de liaison respectivement à la ligne téléphonique 101, à une ligne téléphonique 22, reliant le dispositif 16 et l'équipement téléphonique 20, et à une ligne informatique 23, reliant le dispositif 16 et l'équipement informatique 21.

D'emblée, on notera que par "ligne téléphonique" et "ligne informatique", on entend désigner une ligne de transport d'informations téléphoniques et une ligne de transport d'informations informatiques, respectivement. Par "informations téléphoniques", on définit des informations transmises à travers un réseau téléphonique, lors d'une communication entre des équipements téléphoniques. De même, des "informations informatiques" désignent des informations transmises à travers un réseau informatique, lors d'une communication entre des équipements informatiques.

Les trois ports 1-3 sont reliés à un bloc mélangeur / séparateur 4, destiné à mélanger en émission et à discriminer en réception des paquets de données téléphoniques et des paquets de données informatiques, comme explicité plus loin. Par "émission et "réception", on entend désigner respectivement l'émission et la réception par l'installation des deux équipements 20 et 21.

Le port 2 de liaison à l'équipement téléphonique 20 est relié au bloc mélangeur / séparateur 4 avec interposition d'un codec 5 et d'un bloc 6 de conversion de format.

Le codec 5 est destiné, en émission, à coder en données téléphoniques vocales des signaux analogiques téléphoniques de voix (c'est-à-dire en signaux analogiques téléphoniques véhiculant de la voix), émis par l'équipement téléphonique 20, et, en réception, à décoder des données téléphoniques vocales en signaux analogiques téléphoniques de voix, destinés à l'équipement 20.

Le bloc 6 de conversion de format, interposé entre le codec 5 et le bloc 4, est destiné, en émission, à décomposer un flux de données téléphoniques en paquets de données téléphoniques, et, en réception, à recomposer un flux de données téléphoniques à partir de paquets de données téléphoniques reçus, suivant les protocoles TCP/IP.

Un bloc de marquage 7 est relié au bloc 6 et destiné, en émission, à insérer dans chacun des paquets de données téléphoniques à émettre, un descripteur de contenu, spécifiant qu'il s'agit d'un paquet de données téléphoniques.

Le bloc mélangeur / séparateur 4 est relié au port 1 de liaison à la ligne 101 avec intérposition d'un modem 8. Celui-ci est destiné, en émission, à moduler des données, ou paquets de données, à émettre, autrement dit à les convertir en signaux analogiques téléphoniques capables de véhiculer les données, ou paquets de données, à travers le réseau téléphonique 100, et, en réception, à démoduler des signaux analogiques téléphoniques reçus, véhiculant des données, ou paquets de données, autrement dit à les convertir en données, ou paquets de données.

Le dispositif 16 comprend un bloc d'interception 9 et un bloc 10 de connexion au serveur 30. Le bloc d'interception 9, relié au port de liaison 2, est destiné à intercepter un numéro d'appel téléphonique d'un équipement téléphonique appelé, émis par l'équipement 20 et reçu par le port 2, et à adresser au serveur 30 une requête d'appel de l'équipement appelé. Le bloc de connexion 10 relié au bloc d'interception 9 et à un point situé entre le bloc mélangeur / séparateur 4 et un bloc de détection 13, explicité plus loin, permet de connecter le dispositif 16 au serveur 30, par liaison téléphonique à travers le réseau 100, par exécution d'un protocole de connexion.

Le bloc de détection 13, interposé entre le bloc mélangeur / séparateur 4 et le modem 8, est destiné à détecter une notification d'appel téléphonique entrant, émise par le serveur 30 et reçue par le port de liaison 1, et à adresser au serveur 30 une notification d'acceptation d'appel.

Le dispositif 16 comprend également
- un bloc 12 de détection d'un décroché téléphonique et/ou d'une communication téléphonique en cours de l'équipement téléphonique 20, par détection d'un courant de boucle, interposé entre le port de liaison 2 et le codec 5, et
- un bloc 11 de détection d'une communication informatique en cours de l'équipement informatique 21, par détection d'un courant de boucle, interposé entre le port de liaison 3 et le bloc 4.

Le dispositif 16 comprend un indicateur sonore 14, commandé par le module de détection d'une notification d'appel téléphonique entrant, pour avertir un utilisateur d'un appel entrant, ainsi qu'une touche d'activation / désactivation 15 destinée à activer et à désactiver les blocs 4 à 7.

Enfin, le dispositif 16 comprend un bloc central de commande, en l'espèce un microprocesseur, non représenté, auquel tous les éléments décrits ci-dessus sont reliés et destiné à commander le fonctionnement du dispositif 16.

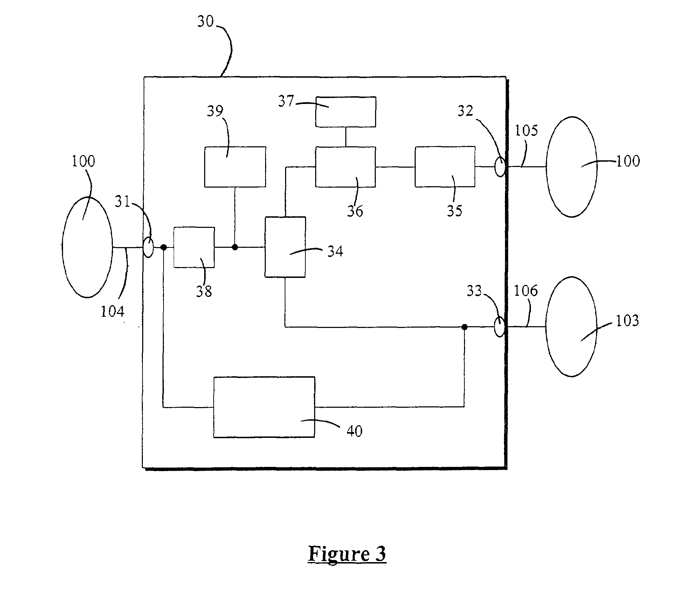

Le serveur 30, représenté sur la figure 3, fait fonction à la fois de fournisseur d'accès à l'Internet 103 et de système de multiplexage / démultiplexage pour l'émission et la réception d'informations téléphoniques et d'informations informatiques par les équipements 20 et 21. On rappelle ici que par "émission" et "réception", on entend désigner l'émission et la réception vis-à-vis des équipements 20 et 21.

Le serveur 30 comprend trois ports 31-33 de liaison à deux lignes téléphoniques 104, 105 du réseau téléphonique 100 et à une ligne informatique 106 de l'Internet 103, respectivement.

Les trois ports 31-33 sont reliés à un bloc mélangeur / séparateur 34 destiné à mélanger en réception et à discriminer en émission des paquets de données téléphoniques et des paquets de données informatiques, comme explicité plus loin.

Le port 32 de liaison à la ligne téléphonique 105 est relié au bloc 34 avec interposition d'un codec 35 et d'un bloc 36 de conversion de format.

Le bloc 36 de conversion de format est destiné, en réception, à décomposer un flux de données téléphoniques en paquets de données téléphoniques et, en émission, à recomposer un flux de données téléphoniques à partir de paquets de données téléphoniques. En outre, le bloc 36 est relié à un bloc de marquage 37 destiné, en réception, à insérer dans chacun des paquets de données informatiques un descripteur de contenu, spécifiant qu'il s'agit d'un paquet de données téléphoniques.

Le codec 35, interposé entre le port 32 et le bloc 36, est destiné, en émission, à décoder des données téléphoniques vocales en signaux analogiques téléphoniques de voix (c'est-à-dire véhiculant de la voix), et, en réception, à coder des signaux analogiques téléphoniques de voix en données téléphoniques vocales.

Le bloc mélangeur / séparateur 34 est relié au port 31 de liaison à la ligne téléphonique 104, avec interposition d'un modem 38. Celui-ci est destiné, en réception, à moduler des données, ou paquets de données, autrement dit à les convertir en signaux analogiques téléphoniques capables de véhiculer les données, ou paquets de données, à travers le réseau téléphonique 100, et, en émission, à démoduler des signaux analogiques téléphoniques, véhiculant des données, ou paquets de données, autrement dit à les convertir en données, ou paquets de données.

Un bloc 39 d'accès au service de multiplexage / démultiplexage est relié au port de liaison 31 et comprend une base de données contenant une pluralité de noms et de mots de passe associés d'utilisateur ayant accès au service de multiplexage / démultiplexage et une application de connexion pour vérifier le nom et le mot de passe de chaque utilisateur souhaitant accéder au service de multiplexage / démultiplexage.

Le serveur 30 intègre en outre un bloc 40 de connexion à l'Internet 103, relié au port 31 de liaison à la ligne téléphonique 104 et au port 33 de liaison à la ligne informatique 106. Le bloc 40 comprend une application de fournisseur d'accès à l'Internet 103, permettant au serveur 30 de connecter des équipements informatiques d'utilisateur à l'Internet 103, ainsi qu'une base de données contenant une pluralité de noms et de mots de passe associés d'utilisateur autorisé à se connecter à l'Internet 103 par l'intermédiaire du serveur 30 et, le cas échéant, à valider la connexion.

Enfin, le serveur 30 comprend un bloc central de commande, en l'espèce un microprocesseur, non représenté, auquel tous les éléments décrits ci-dessus sont reliés, et destiné à commander le fonctionnement du serveur 30.

Le réseau téléphonique 100 comprend de façon classique un autocommutateur 102, destiné à établir des liaisons téléphoniques, à travers le réseau 100. L'installation des équipements 20 et 21 dispose d'un service de transfert d'appel entrant, permettant de transférer vers le serveur 30 des appels entrants, destinés à la ligne téléphonique 101, autrement dit à l'installation 20, 21, sur intervention de l'autocommutateur 102.

Le procédé pour émettre à la fois des informations téléphoniques et des informations informatiques et le procédé pour recevoir à la fois des informations téléphoniques et des informations informatiques, à l'aide des équipements 20 et 21, correspondant aux fonctionnements du dispositif 16 et du serveur 30, vont maintenant être décrits.

On va d'abord expliciter le cas où l'équipement téléphonique 20, appelant, établit une communication téléphonique avec un autre équipement téléphonique 24, appelé, après l'établissement d'une communication informatique par l'équipement informatique 21.

Afin de communiquer à travers l'Internet 103, sous la commande d'un utilisateur, l'équipement informatique 21 se connecte à l'Internet 103 en établissant une liaison téléphonique à travers le réseau 100 avec le serveur 30. Pour se connecter à l'Internet 103, l'équipement 21 envoie un nom et un mot de passe d'utilisateur au serveur 30 qui les compare à ceux contenus dans la base de données des utilisateurs ayant accès à l'Internet 103 et ici valide la connexion. La liaison téléphonique établie pour la connexion à l'Internet 103 utilise, côté équipements 20, 21, la ligne téléphonique 101 et, côté serveur 30, la ligne téléphonique 104. Lors de la communication informatique, l'équipement informatique 21 émet et reçoit des paquets de données informatiques qui, lors de leur transmission, transitent par le serveur 30 d'accès à l'Internet 103.

Afin d'appeler un téléphone correspondant 24 lors de la communication informatique en cours de l'équipement informatique 21 à travers l'Internet 103, sous la commande d'un utilisateur, les blocs 4 à 7 sont activés, à l'aide de la touche 15, et l'équipement téléphonique 20 compose puis envoie vers la ligne téléphonique 22 le numéro d'appel téléphonique du téléphone appelé 24. Dans le dispositif 16, le bloc d'interception 9 intercepte le numéro d'appel téléphonique du téléphone 24, reçu via le port de liaison 2. Le bloc de détection 11 détecte la communication informatique en cours et, sous la commande du bloc de connexion 10, le dispositif 16 se connecte au serveur 30 pour accéder au service de multiplexage / démultiplexage, en utilisant la liaison téléphonique préétablie pour la communication informatique. Lors de la connexion, le bloc 10 envoie un nom et un mot de passe d'utilisateur au serveur 30 qui les compare avec ceux contenus dans la base de données des utilisateurs ayant accès au service de multiplexage / démultiplexage, afin de valider la connexion. Après connexion au serveur 30, sous la commande du bloc 9, le dispositif 16 envoie au serveur 30 une requête d'appel du téléphone 24, contenant le numéro d'appel téléphonique de ce dernier.

Après réception de la requête d'appel, le serveur 30 appelle le téléphone appelé 24 et établit avec lui une liaison téléphonique à travers le réseau téléphonique 100, en utilisant la ligne téléphonique 105. Ainsi, les deux équipements téléphoniques 20 et 24 sont mis en communication l'un avec l'autre par l'intermédiaire du serveur 30 et toutes les informations téléphoniques échangées entre les deux équipements 20 et 24 transitent par le serveur 30.

Les communications simultanées des équipements 20 et 21 vont maintenant être décrites, pour l'émission et pour la réception d'informations téléphoniques et d'informations informatiques.

### 1) Emission simultanée d'informations téléphoniques et d'informations informatiques par les deux équipements téléphonique et informatique

L'équipement téléphonique 20 émet vers la ligne téléphonique 22 des signaux analogiques de voix qui sont reçus par le dispositif 16 via le port de liaison 2. Le codec 5 code les signaux de voix reçus en donnés téléphoniques vocales qui sont ensuite décomposées en paquets de données téléphoniques vocales par le bloc 6 de conversion de format. Le bloc de marquage 7 insère dans chacun des paquets de données téléphoniques un descripteur de contenu.

Par ailleurs, l'équipement informatique 21 décompose lui-même des données informatiques à émettre en paquets de données informatiques et émet ceux-ci vers la ligne informatique 23. Les paquets de données informatiques sont reçus par le dispositif 16 via le port de liaison 3.

Les paquets de données téléphoniques et les paquets de données informatiques sont regroupés, mélangés par le bloc mélangeur / séparateur 4, pour former un flux de paquets de données (contenant des paquets de données téléphoniques et des paquets de données informatiques) qui est modulé par le modem 8 avant d'être émis vers le serveur 30, par le port de liaison 1 et la ligne téléphonique 101.

Le flux de paquets de données est reçu par le serveur 30, via le port de liaison 31, puis démodulé par le modem 38. Le bloc mélangeur / séparateur 34 examine tous les paquets de données reçus, y détecte les descripteurs de contenu des paquets de données téléphoniques, à l'aide desquels il discrimine puis sépare les paquets de données téléphoniques et les paquets de données informatiques.

Le bloc 34 transmet les paquets de données téléphoniques au bloc 36 de conversion de format qui recompose le flux de données téléphoniques vocales. Celles-ci sont ensuite transformées en signaux analogiques de voix qui sont transmis vers le téléphone appelé 24, à travers le réseau téléphonique 100, via le port de liaison 32 et la ligne téléphonique 105.

Le bloc 34 retransmet également les paquets de données informatiques vers l'Intemet 103, via le port de liaison 33 et la ligne informatique 106.

### 2) Réception simultanée d'informations téléphoniques et d'informations informatiques par les deux équipements téléphonique et informatique

En réception, le serveur 30 reçoit des signaux analogiques de voix émis par le téléphone 24, par la ligne téléphonique 105 et le port de liaison 32. Le codec 35 code ces signaux de voix en données téléphoniques vocales qui sont ensuite décomposées en paquets de données téléphoniques vocales par le bloc 36 de conversion de format. Le bloc de marquage 37 insère dans chacun des paquets de données téléphoniques un descripteur de contenu.

Le serveur 30 reçoit également des paquets de données informatiques, relatifs à la communication de l'équipement 21 à travers l'Internet 103, par la ligne informatique 106 et le port de liaison 33.

Le bloc mélangeur / séparateur 34 regroupe, mélange les paquets de données téléphoniques et les paquets de données informatiques pour former un flux de paquets de données (contenant des paquets de données téléphoniques et des paquets de données informatiques) qui est modulé par le modem 38 avant d'être émis, via le port de liaison 31 et la ligne téléphonique 104, vers la ligne téléphonique 101, à travers le réseau téléphonique 100.

Le flux de paquets de données est reçu par le dispositif 16, via le port de liaison 1, puis démodulé par le modem 4. Le bloc mélangeur / séparateur 4 examine tous les paquets de données afin de détecter les descripteurs de contenu des paquets de données téléphoniques et ainsi discriminer puis séparer les paquets de données informatiques et les paquets de données téléphoniques.

Le bloc 4 transmet les paquets de données téléphoniques au bloc 6 de conversion de format qui recompose le flux de données téléphoniques vocales. Celles-ci sont ensuite transformées par le codec 5 en signaux analogiques de voix qui sont transmis vers l'équipement téléphonique 20, via le port 2 et la ligne téléphonique 22.

Le bloc 4 transmet les paquets de données informatiques à l'équipement informatique 21, par le port de liaison 3 et la ligne téléphonique 23.

Le cas où l'équipement informatique 21 établit une communication informatique, après l'établissement d'une communication téléphonique entre les équipements téléphoniques 20 et 24, respectivement appelant et appelé, va maintenant être explicité.

Sous la commande de l'utilisateur, les blocs 4 à 7 sont activés et l'équipement téléphonique 20 compose le numéro d'appel téléphonique de l'équipement appelé 24, qui est envoyé vers la ligne téléphonique 22, reçu par le dispositif 16, via le port 2, et intercepté par le bloc d'interception 9. Le bloc 11 ne détectant pas de communication informatique en cours, sous la commande du bloc de connexion 10, le dispositif 16 se connecte au serveur 30, comme précédemment explicité, en établissant avec le serveur 30 une liaison téléphonique à travers le réseau téléphonique 100. Cette liaison téléphonique établie utilise, côté équipements 20, 21, la ligne téléphonique 101 et, côté serveur 30, la ligne téléphonique 104.

Après connexion, le dispositif 16 adresse au serveur 30 une requête d'appel du téléphone 24. Le serveur 30 appelle le téléphone 24 afin d'établir avec lui une liaison téléphonique à travers le réseau téléphonique 100, en utilisant la ligne téléphonique 105. Les deux équipements téléphoniques 20 et 21 sont ainsi mis en communication l'un avec l'autre par l'intermédiaire du serveur 30, les informations téléphoniques échangées entre les deux équipements 20 et 24 transitant par le serveur 30.

Sous la commande de l'utilisateur, l'équipement 21 se connecte à l'Internet 103, en utilisant la liaison téléphonique préétablie avec le serveur 30 pour la communication téléphonique en cours.

Après établissement de la communication téléphonique et de la communication informatique, les deux équipements, téléphonique 20 et informatique 21, communiquent simultanément, comme précédemment explicité.

Dans un autre cas envisageable, l'équipement téléphonique 20 est appelé par un autre équipement téléphonique, par exemple le téléphone 24, lors d'une communication informatique en cours de l'équipement informatique 2-1 à travers l'Internet 103.

Dans ce cas, l'autocommutateur 102 transfère l'appel vers le serveur 30, établit une liaison téléphonique entre l'équipement appelant 24 et le serveur 30, et adresse au serveur 30 une requête d'appel de l'équipement 20 contenant le numéro d'appel téléphonique de celui-ci. Le serveur 30 adresse à l'installation des équipements 20-21 une notification d'appel téléphonique entrant, en utilisant la liaison téléphonique préétablie pour la communication de l'équipement 21 à travers l'Internet 103. La notification d'appel entrant, reçue par le port de liaison 1, est détectée et interceptée par le bloc de détection 13 qui active alors l'indicateur sonore. L'utilisateur décroche l'équipement 20, le bloc 12 détecte le décroché téléphonique de l'équipement 20 et le bloc 11 adresse alors au serveur 30 une notification d'acceptation de l'appel entrant et active les blocs 4 à 7. La communication téléphonique entre les téléphones 20 et 24 peut alors débuter. Les deux équipements, téléphonique 20 et informatique 21, communiquent ensuite simultanément, comme précédemment explicité.

## Revendications

1. Procédé pour émettre à la fois des informations téléphoniques, d'un équipement téléphonique (20) de communication à travers un réseau téléphonique (100), et des informations informatiques, d'un équipement informatique (21) de communication à travers un réseau informatique (103), les deux équipements (20, 21) étant connectés à une même ligne (101) du réseau téléphonique (100), dans lequel, côté équipements (20, 21), on multiplexe les informations téléphoniques et les informations informatiques et on les transmet, par ladite ligne (101) du réseau téléphonique (100), vers un serveur (30) qui les démultiplexe afin de retransmettre les informations téléphoniques vers le réseau téléphonique (100) et les informations informatiques vers le réseau informatique (101).

2. Procédé selon la revendication 1, dans lequel, côté équipements (20, 21), on met les informations téléphoniques et les informations informatiques sous forme de paquets de données téléphoniques et de paquets de données informatiques, respectivement, en insérant un descripteur de contenu dans chacun des paquets de données de l'un au moins des deux types de données, téléphonique et informatique, et on émet les paquets de données vers le serveur (30) qui discrimine les paquets de données téléphoniques et les paquets de données informatiques, à l'aide des descripteurs.

3. Procédé selon l'une des revendications 1 et 2, dans lequel, les informations téléphoniques émises par l'équipement téléphonique (20) étant véhiculées par des signaux analogiques téléphoniques, on code, côté équipements (20, 21), lesdits signaux en données téléphoniques que le serveur (30) décode avant de retransmettre les signaux analogiques téléphoniques véhiculant les informations téléphoniques, à travers le réseau téléphonique (100).

4. Procédé pour recevoir à la fois des informations téléphoniques, destinées à un équipement téléphonique (20) de communication à travers un réseau téléphonique (100), et des informations informatiques, destinées à un équipement informatique (21) de communication à travers un réseau informatique (103), les deux équipements (20, 21) étant connectés à une même ligne (101) du réseau téléphonique (100), dans lequel, côté réseaux (100, 103), on transmet les informations téléphoniques et les informations informatiques, destinées aux deux équipements (20, 21), à un serveur (30) qui les multiplexe avant de les retransmettre vers les deux équipements (20, 21), par ladite ligne (101) du réseau téléphonique (100), et, côté équipements (20, 21), on démultiplexe les informations reçues afin de retransmettre les informations téléphoniques vers l'équipement téléphonique (20) et les informations informatiques vers l'équipement informatique (21).

5. Procédé selon la revendication 4, dans lequel, les informations informatiques reçues par le serveur (30) étant sous forme de paquets de données informatiques, le serveur (30) met les informations téléphoniques sous forme de paquets de données téléphoniques en insérant un descripteur de contenu dans chacun des paquets de données de l'un au moins des deux types de données, informatique et téléphonique, et, côté équipements (20, 21), on discrimine les paquets de données téléphoniques et les paquets de données informatiques, à l'aide des descripteurs.

6. Procédé selon l'une des revendications 4 et 5, dans lequel les informations téléphoniques, reçues par le serveur (30), étant véhiculées par des signaux analogiques téléphoniques, le serveur (30) code lesdits signaux en données téléphoniques que l'on décode, côté équipements (20, 21), avant de retransmettre vers l'équipement téléphonique (20) les signaux analogiques téléphoniques véhiculant les informations téléphoniques.

7. Dispositif de multiplexage / démultiplexage d'informations téléphoniques et d'informations informatiques pour la mise en oeuvre du procédé selon l'une des revendications 1 et 4, comprenant des moyens (4-6; 34-36) de multiplexage / démultiplexage d'informations téléphoniques et d'informations informatiques reliés à trois ports (1-3, 31-33) de liaison à deux lignes téléphoniques (101, 22; 104, 105) et à une ligne informatique (23; 106), respectivement.

8. Dispositif selon la revendication 7, dans lequel les moyens de multiplexage / démultiplexage (4, 6; 34, 36) comprennent des moyens (6; 36) pour décomposer des données téléphoniques en paquets de données téléphoniques et pour recomposer des données téléphoniques à partir de paquets de données téléphoniques.

9. Dispositif selon l'une des revendications 7 et 8, dans lequel il est prévu, entre les moyens de multiplexage / démultiplexage (4, 6; 34, 36) et l'une des deux lignes téléphoniques (22; 105), des moyens de codage / décodage (5; 35) pour coder en données téléphoniques des signaux analogiques téléphoniques, véhiculant des informations téléphoniques, et pour décoder des données téléphoniques en signaux analogiques téléphoniques véhiculant des informations téléphoniques.

10. Dispositif selon l'une des revendications 7 à 9, dans lequel il est prévu un port (2) de liaison à un équipement téléphonique (20), un port (3) de liaison à un équipement informatique (21) et un port (1) de liaison à une ligne (101) d'un réseau téléphonique (100).

11. Dispositif selon l'une des revendications 7 à 9, dans lequel il est prévu deux ports (31, 32) de liaison à deux lignes (104, 105) d'un réseau téléphonique (100), respectivement, et un port (33) de liaison à une ligne (106) d'un réseau informatique (103).
